(19) Europäisches Patentamt
European Patent Office
Office européen des brevets

(11) EP 4 685 196 A1

(12) # EUROPEAN PATENT APPLICATION
published in accordance with Art. 153(4) EPC

(43) Date of publication:
**28.01.2026 Bulletin 2026/05**

(21) Application number: **24774922.9**

(22) Date of filing: **19.03.2024**

(51) International Patent Classification (IPC):
***C09B 59/00*** *(2006.01)* ***C08L 101/00*** *(2006.01)*
***C09B 67/20*** *(2006.01)* ***C09D 11/037*** *(2014.01)*

(52) Cooperative Patent Classification (CPC):
**C08L 101/00; C09B 59/00; C09B 67/006; C09D 11/037**

(86) International application number:
**PCT/JP2024/010677**

(87) International publication number:
**WO 2024/195787 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.03.2023 JP 2023044327**

(71) Applicant: **Sekisui Chemical Co., Ltd.**
**Osaka-shi, Osaka 530-8565 (JP)**

(72) Inventors:
- **MATSUMOTO, Ikuya**
  **Kyoto-shi, Kyoto 601-8105 (JP)**
- **ISHII, Masahiro**
  **Kyoto-shi, Kyoto 601-8105 (JP)**
- **KUDO, Takuya**
  **Kyoto-shi, Kyoto 601-8105 (JP)**

(74) Representative: **Cabinet Beau de Loménie**
**103, rue de Grenelle / CS 90800**
**75340 Paris Cedex 07 (FR)**

(54) **NEAR-INFRARED-TRANSMITTING BLACK PARTICLES, INK, AND MOLDED BODY**

(57) The present invention provides near-infrared transmitting black particles that enables manufacturing a high-performance optical film that has high design properties, and contributes to retinal safety, sensor precision, and sensor sensitivity. Provided are near-infrared transmitting black particles having a transmittance $T_{700}$ at a wavelength of 700 nm of less than 36%, a transmittance $T_{900}$ at a wavelength of 900 nm of 70% or more, a maximum diffuse transmittance of 5% or less in a wavelength region of 850 nm or more and less than 2,500 nm, and a difference of 630 nm or less between a wavelength $\lambda_{min}$ at the minimum transmittance and a wavelength $\lambda_{max}$ at a transmittance of 90% in a wavelength region of 400 nm or more and 2,500 nm or less as measured using a spectrophotometer.

EP 4 685 196 A1

## Description

### TECHNICAL FIELD

The present invention relates to near-infrared transmitting black particles, an ink, and a formed article.

### BACKGROUND ART

Examples of black materials that have been commonly used include carbon black as well as iron oxide black (triiron tetraoxide). Since these materials are black and absorb light at wavelengths from the visible region to the far-infrared region, articles such as coating films colored with these black materials tend to absorb sunlight to be heated to high temperature. Articles colored with carbon black have poor electrical insulation properties due to the electroconductivity of carbon black.

Meanwhile, black materials with properties different from those of black materials such as carbon black that have been commonly used have been required in more fields among the fields of electronic equipment and optical equipment due to the use of infrared laser beam irradiation and the progress of the sensors corresponding thereto.

Oil-soluble dyes have been used as coloring materials for infrared transmitting filters, for example, in infrared communication, infrared camouflage, and optical filters. Unfortunately, these oil-soluble dyes are insufficient in terms of, for example, durability such as heat resistance, solvent resistance, and light resistance. Dark color materials have therefore been desired that have high durability and high infrared transparency.

In particular, black materials are practically used having sufficient transparency to rays at wavelengths from near-infrared to infrared rays. For example, Patent Literature 1 discloses a dark colored azo pigment yielded by the coupling reaction of 2-hydroxy-11H-benzo[a]carbazole-3-carboxy-N-benzimidazolone-5-amide as a coupling component and a known diazo compound as a diazo component.

Patent Literature 2 discloses a black film containing black material at a volume fraction of 2% by volume or more and 30% by volume or less and having an average dispersed particle size of 1 nm or more and 200 nm or less, an optical density of 1 or more per micrometer of thickness, and a volume resistivity of $10^{11}$ $\Omega\cdot$cm or more.

Patent Literature 3 discloses a composition for a color filter containing near-infrared transmitting black color material. Bisbenzofuranone pigments and other pigments are disclosed as the near-infrared transmitting black color material.

### CITATION LIST

#### - Patent Literature

Patent Literature 1: WO 2010/044393
Patent Literature 2: WO 2012/026577
Patent Literature 3: JP 2014-130173 A

### SUMMARY OF INVENTION

#### - Technical problem

Near-infrared sensors or near-infrared cameras have been recently used for enhancing the security in various information terminals such as smartphones and tablet PCs. Near-infrared sensors such as motion sensors or near-infrared cameras have also been used in cars. Optical filters therefor are required not to block light emitted from sensor light sources and to have high blackness and design properties. Furthermore, short-wavelength infrared rays (infrared rays in a region adjacent to the visible region) among infrared rays for sensors are said to pose a risk of damaging the retina in the eye. These rays need to be prevented from entering the eyes as completely as possible.

Unfortunately, even the materials of Patent Literature 1 and Patent Literature 2 cannot transmit sufficient light emitted from sensor light sources, so that the materials still have insufficient transmittance. The materials also have insufficient blackness and poor design properties, which makes it necessary to thicken the coating to be formed or add more black material to enhance the blackness, improving the design properties. Consequently, the design of the coating may be limited.

Even the optical filter formed from the composition for a color filter of Patent Literature 3 has high transmittance especially near the upper limit of the visible region, and cannot block infrared rays at shorter wavelengths sufficiently. The

optical filter does not suppress the scattering of light in the near-infrared region sufficiently, either, and has high diffuse transmittance, resulting in noise in sensors.

In view of the above-mentioned situation, the present invention is directed to providing near-infrared transmitting black particles that enables manufacturing a high-performance optical film that has high design properties, and contributes to retinal safety, sensor precision, and sensor sensitivity.

- Solution to problem

The disclosure (1) relates to near-infrared transmitting black particles having a transmittance $T_{700}$ at a wavelength of 700 nm of less than 36%, a transmittance $T_{900}$ at a wavelength of 900 nm of 70% or more, a maximum diffuse transmittance of 5% or less in a wavelength region of 850 nm or more and less than 2,500 nm, and a difference of 630 nm or less between a wavelength $\lambda_{min}$ at the minimum transmittance and a wavelength $\lambda_{max}$ at a transmittance of 90% in a wavelength region of 400 nm or more and 2,500 nm or less as measured using a spectrophotometer.

The disclosure (2) relates to the near-infrared transmitting black particles of the disclosure (1) having an average transmittance of 25% or less in a wavelength region of 400 nm or more and less than 800 nm and an average transmittance of 80% or more in a wavelength region of 850 nm or more and less than 2,500 nm as measured using a spectrophotometer.

The disclosure (3) relates to the near-infrared transmitting black particles of the disclosure (1) or (2), containing an organic black compound.

The disclosure (4) relates to the near-infrared transmitting black particles of the disclosure (3), wherein the organic black compound has a structural unit derived from a compound having a hydroxy group-containing aromatic ring and a structural unit derived from a compound having an amino group-containing benzene ring.

The disclosure (5) relates to the near-infrared transmitting black particles of the disclosure (3) or (4), wherein the organic black compound has a structural unit in which the structural unit derived from the compound having the hydroxy group-containing aromatic ring or the structural unit derived from the compound having the amino group-containing benzene ring is oxidized.

The disclosure (6) relates to the near-infrared transmitting black particles of any one of the disclosures (3) to (5), wherein the organic black compound is oxidized with an oxidizer.

The disclosure (7) relates to the near-infrared transmitting black particles of the disclosure (6), wherein the oxidizer contains a ketone compound.

The disclosure (8) relates to the near-infrared transmitting black particles of any one of the disclosures (1) to (7), wherein the near-infrared transmitting black particles have a crosslinking agent or a structural unit derived from the crosslinking agent.

The disclosure (9) relates to the near-infrared transmitting black particles of any one of the disclosures (3) to (8), wherein the organic black compound contains an auxochrome.

The disclosure (10) relates to the near-infrared transmitting black particles of any one of the disclosures (1) to (9), wherein the near-infrared transmitting black particles have a transmittance $T_{905}$ at a wavelength of 905 nm of 75% or more as measured using a spectrophotometer.

The disclosure (11) relates to the near-infrared transmitting black particles of any one of the disclosures (1) to (10), wherein the near-infrared transmitting black particles have a transmittance $T_{940}$ at a wavelength of 940 nm of 75% or more as measured using a spectrophotometer.

The disclosure (12) relates to the near-infrared transmitting black particles of any one of the disclosures (1) to (11), wherein the near-infrared transmitting black particles have a transmittance $T_{1,550}$ at a wavelength of 1,550 nm of 90% or more as measured using a spectrophotometer.

The disclosure (13) relates to an ink containing the near-infrared transmitting black particles of any one of the disclosures (1) to (12); a solvent; and a binder resin.

The disclosure (14) relates to a formed article containing the near-infrared transmitting black particles of any one of the disclosures (1) to (12) and a binder resin.

Hereinafter, the present invention will be described in detail.

As a result of earnest study, the present inventors have found that a high-performance optical film can be manufactured from black particles having a transmittance $T_{700}$ at a wavelength of 700 nm in a predetermined range, a transmittance $T_{900}$ at a wavelength of 900 nm in a predetermined range, a maximum diffuse transmittance in a predetermined range in a wavelength region of 850 nm or more and less than 2,500 nm, and a difference between the specific wavelengths in a predetermined range. The present inventors have also found that such an optical film has high design properties, improves the retinal safety, contributes to sensor precision and sensor sensitivity, and can be appropriately used especially for optical sensors, such as near-infrared sensors, optical sensors for near-infrared cameras or others for smartphones, cars, or others. Consequently, the present inventors have completed the present invention.

The near-infrared transmitting black particles have a transmittance $T_{700}$ at a wavelength of 700 nm of less than 36% as measured using a spectrophotometer.

When the transmittance is in the range, the near-infrared transmitting black particles enable manufacturing an optical film that can exhibit very high light-shielding properties in the visible region, can also exhibit high light-shielding properties throughout the visible region, and has high design properties. A film can be manufactured that achieves high retinal safety.

The $T_{700}$ is preferably 20% or less, more preferably 10% or less.

The lower limit of the $T_{700}$ may be any value. The lower the $T_{700}$, the better. For example, the lower limit is 0% or more.

The transmittance can be measured using a spectrophotometer with an integrating sphere, a reflective plate being installed opposite to the ray incident side. Mere "transmittance" described herein refers to "total light transmittance", which is distinguished from the below-described "diffuse transmittance".

As a sample for measuring the transmittance is used a glass plate having a coating film with a thickness of 5 $\mu$m and manufactured by a method involving mixing the near-infrared transmitting black particles with polyvinyl acetal resin at a ratio of 1:2, dissolving the mixture in solvent, then applying the solution to a glass plate, and removing the solvent by drying.

The near-infrared transmitting black particles have a transmittance $T_{900}$ at a wavelength of 900 nm of 70% or more as measured using a spectrophotometer.

When the transmittance is in the range, an optical film can be manufactured that can exhibit very high transparency in the near-infrared region, and contributes to improvement in sensor precision. Since the use of such an optical film contributes to high sensor sensitivity, the power consumption of various information terminals or others can be reduced.

The $T_{900}$ is preferably 75% or more, more preferably 80% or more, further preferably 90% or more.

The upper limit of the $T_{900}$ may have any value. The higher the $T_{900}$, the better. For example, the upper limit is 100% or less.

The $T_{900}$ can be measured in the same way as the measurement of the $T_{700}$.

The near-infrared transmitting black particles have a maximum diffuse transmittance (hereinafter also referred to as "$Tdmax_{850-2,500}$") of less than 5% in a wavelength region of 850 nm or more and less than 2,500 nm as measured using a spectrophotometer.

When the maximum diffuse transmittance is in the range, the diffusion of near-infrared rays can be suppressed to reduce the transmitted infrared rays incident into wrong light-receiving elements. Sensor noise can therefore be reduced to suppress false recognition.

The maximum diffuse transmittance is preferably 3% or less, more preferably 1% or less.

The lower limit of the maximum diffuse transmittance may have any value. The lower the maximum diffuse transmittance, the better. For example, the lower limit is 0% or more.

The diffuse transmittance can be measured using a spectrophotometer with an integrating sphere, a reflective plate opposed to the ray incident side being removed to configure the system such that only diffuse light remains in the integrating sphere.

The near-infrared transmitting black particles have a difference of 630 nm or less between a wavelength $\lambda_{min}$ at the minimum transmittance and a wavelength $\lambda_{max}$ at a transmittance of 90% in a wavelength region of 400 nm or more and 2,500 nm or less.

When the difference is in the range, a high-performance optical film can be manufactured that can exhibit very high light-shielding properties in the visible region, can also exhibit high light-shielding properties throughout the visible region, blocks near-infrared rays near the visible region, which near-infrared rays can damage the retina in use for near-infrared sensors, and also has high design properties. A high-performance optical film can be manufactured that can suppress the diffusion of light in the visible region and the near-infrared region.

The difference between the $\lambda_{min}$ and $\lambda_{max}$ is preferably 300 nm or less, more preferably 250 nm or less.

The lower limit of the difference between the $\lambda_{min}$ and $\lambda_{max}$ may have any value, for example, 50 nm or more.

The $\lambda_{min}$ and $\lambda_{max}$ can be determined by measuring and determining the transmittances, for example, at wavelength intervals of 5 nm in the same method as the method for measuring $T_{700}$.

When the minimum transmittance, $\lambda_{min}$, is exhibited at multiple wavelengths, $\lambda_{min}$ means the longest wavelength at the minimum transmittance. For example, if both the results of measurements at wavelengths of 610 nm and 620 nm are the minimum transmittance, namely 5.5%, the wavelength of 620 nm is adopted as the wavelength $\lambda_{min}$.

The wavelength $\lambda_{max}$ at a transmittance of 90% means the shortest wavelength among the wavelengths at which the transmittances are 90% or less, the transmittances being more than 90% at respective adjacent wavelengths. For example, if the result measured at a wavelength of 865 nm is a transmittance of 89.9%, and the result measured at an adjacent wavelength of 870 nm is a transmittance of 90.5%, the wavelength of 865 nm is adopted as the wavelength $\lambda_{max}$. For example, if the result measured at a wavelength of 865 nm is a transmittance of 89.9%, and the result measured at an adjacent wavelength of 870 nm is a transmittance of 90.5%; and the result measured at a wavelength of 905 nm is a transmittance of 89.9%, and the result measured at an adjacent wavelength of 910 nm is a transmittance of 90.5%, namely

if multiple wavelengths apply, the shorter wavelength 865 nm is adopted as the wavelength $\lambda_{max}$.

The near-infrared transmitting black particles preferably have an average transmittance (hereinafter also referred to as "$TA_{400-800}$") of 25% or less in a wavelength region of 400 nm or more and less than 800 nm as measured using a spectrophotometer.

When the average transmittance is in the range, an optical film can be manufactured that can exhibit very high light-shielding properties in the visible region, and has high design properties.

The $TA_{400-800}$ is more preferably 15% or less, further preferably 10% or less, still more preferably 5% or less.

The lower limit of the $TA_{400-800}$ may have any value. The lower the $TA_{400-800}$, the better. For example, the lower limit is 0% or more.

The average transmittance can be determined by measuring the transmittances at wavelength intervals of 5 nm in the same method as the method for measuring $T_{700}$ and calculating the average thereof.

The near-infrared transmitting black particles preferably have an average transmittance (hereinafter also referred to as "$TA_{850-2,500}$") of 80% or more in a wavelength region of 850 nm or more and less than 2,500 nm as measured using a spectrophotometer.

When the average transmittance is in the range, a high-performance optical film can be manufactured that can exhibit very high transparency in the near-infrared region. Since the use of such an optical film contributes to high sensor sensitivity, the power consumption of various information terminals or others can be reduced.

The $TA_{850-2,500}$ is more preferably 90% or more, further preferably 95% or more.

The upper limit of the $TA_{850-2,500}$ may have any value. The higher the $TA_{850-2,500}$, the better. For example, the upper limit is 100%.

The average transmittance can be measured in the same way as the measurement of $TA_{400-800}$.

The near-infrared transmitting black particles have a transmittance $T_{905}$ at a wavelength of 905 nm of preferably 75% or more, more preferably 80% or more, further preferably 90% or more as measured using a spectrophotometer.

When the transmittance is in the range, a high-performance optical film can be manufactured that can exhibit high transparency throughout the near-infrared region. An optical film can be manufactured that is suitable for optical sensors especially for smartphones or others. Since the use of such an optical film contributes to high sensor sensitivity, the power consumption of various information terminals or others can be reduced.

The upper limit of $T_{905}$ may have any value. The higher the $T_{905}$, the better. For example, the upper limit is 100% or less.

The $T_{905}$ can be measured in the same way as the measurement of $T_{700}$.

The near-infrared transmitting black particles have a transmittance $T_{940}$ at a wavelength of 940 nm of preferably 75% or more, more preferably 85% or more, further preferably 90% or more as measured using a spectrophotometer.

When the transmittance is in the range, a high-performance optical film can be manufactured that can exhibit high transparency throughout the near-infrared region. An optical film can be manufactured that is suitable especially for optical sensors for smartphones or others. Since the use of such an optical film contributes to high sensor sensitivity, the power consumption of various information terminals or others can be reduced.

The upper limit of $T_{940}$ may have any value. The higher the $T_{940}$, the better. For example, the upper limit is 100%.

The $T_{940}$ can be measured in the same way as the measurement of $T_{700}$.

The near-infrared transmitting black particles have a transmittance $T_{1,550}$ at a wavelength of 1,550 nm of preferably 90% or more, more preferably 95% or more, further preferably 99% or more as measured using a spectrophotometer.

When the transmittance is in the range, a high-performance optical film can be manufactured that can exhibit high transparency throughout the infrared region. An optical film can be manufactured that is suitable for sensors for long distance such as LiDAR. Since the use of such an optical film contributes to high sensor sensitivity, the power consumption of various information terminals or others can be reduced.

The upper limit of $T_{1,550}$ may have any value. The higher the $T_{1,550}$, the better. For example, the upper limit is 100% or less.

The $T_{1,550}$ can be measured in the same way as the measurement of $T_{700}$.

In the near-infrared transmitting black particles, the $T_{700}$, $T_{900}$, $TA_{400-800}$, $TA_{850-2,500}$, $T_{905}$, $T_{940}$, $T_{1,550}$, and $Tdmax_{850-2,500}$ can be adjusted by regulating the composition of the organic black compound, for example, the types of the structural unit derived from the compound having the hydroxy group-containing aromatic ring, the structural unit derived from the compound having the amino group-containing benzene ring, and the crosslinking agent, and the content ratio therebetween or by regulating the reaction conditions and the type and the added amount of the oxidizer. The near-infrared transmitting black particles particularly preferably contain the organic black compound. A particulate organic black compound can be prepared as finer and more uniform particles than black particles prepared by pulverizing traditional black material. When the near-infrared transmitting black particles are oxidized with the oxidizer, the near-infrared transmitting black particles enable enhancing the light-shielding properties in a range to a near-infrared region nearer to the visible region than traditional black particles, and additionally enables enhancing the transmittance and suppressing

the diffusion in the near-infrared region to enable manufacturing an optical film that is more suitable for near-infrared sensors or near-infrared cameras. The use of such an optical film contributes to high sensor sensitivity to enable reducing the power consumption of various information terminals or others and enhancing the sensor precision.

The near-infrared transmitting black particles preferably contain an organic black compound.

When the near-infrared transmitting black particles contain an organic black compound, the near-infrared transmitting black particles can be prepared as finer and more uniform particles to manufacture a higher-performance optical film than in the past.

The organic black compound preferably has a structural unit derived from a compound having a hydroxy group-containing aromatic ring and a structural unit derived from a compound having an amino group-containing benzene ring.

When the near-infrared transmitting black particles contain the organic black compound, the near-infrared transmitting black particles enables manufacturing a higher-performance optical film having high transmittance in the near-infrared region, low transmittance in the visible region, and high design properties.

Examples of the aromatic ring include a benzene ring, a naphthalene ring, and an anthracene ring. Preferred among these are a benzene ring and a naphthalene ring.

Examples of the compound having the hydroxy group-containing naphthalene ring include 1-naphthol, 2-naphthol, dihydroxynaphthalene, trihydroxynaphthalene, tetrahydroxynaphthalene, and pentahydroxynaphthalene. Preferred among these are dihydroxynaphthalene and 1-naphthol. Preferred among dihydroxynaphthalenes are 1,3-dihydroxynaphthalene, 1,5-dihydroxynaphthalene, and 1,6-dihydroxynaphthalene.

Examples of the compound having the hydroxy group-containing benzene ring include phenol and its derivatives, catechol, resorcinol, hydroquinone and its derivatives, hydroxyquinol, phloroglucinol, pyrogallol and its derivatives, and tetrahydroxybenzene and its derivatives.

A plurality of the compounds having the hydroxy group-containing aromatic ring may be used in combination. In this case, preferably, compounds having different hydroxy group-containing aromatic rings are used in combination. More preferably, the compound having the hydroxy group-containing naphthalene ring and the compound having the hydroxy group-containing benzene ring are used in combination. This allows the near-infrared transmitting black particles to exhibit visible light blocking owing to the naphthalene ring and near-infrared light transmission owing to the benzene ring, which are properties that are difficult to achieve at the same time. A plurality of the compounds having the hydroxy group-containing naphthalene ring may be used in combination.

The compound having the hydroxy group-containing benzene ring preferably has 1 to 3 hydroxy groups. The compound having the hydroxy group-containing naphthalene ring preferably has 1 to 4 hydroxy groups. This enables maintaining common nucleophilic attack ability.

The organic black compound contains the structural unit derived from the compound having the hydroxy group-containing aromatic ring in an amount of preferably 10% by weight or more, preferably 80% by weight or less, more preferably 15% by weight or more, more preferably 75% by weight or less, further preferably 20% by weight or more, further preferably 70% by weight or less.

The compound having the amino group-containing benzene ring functions as an auxochrome that donates electrons to the compound having the hydroxy group-containing aromatic ring as a chromophore.

Thus, the compound having the amino group-containing benzene ring may have a group such as an ether group or a hydroxy group in addition to an amino group.

The compound having the amino group-containing benzene ring may be any compound containing an amino group. Examples thereof include compounds having the amino group-containing benzene ring and containing a primary amino group, a secondary amino group, and a tertiary amino group. The compound having the amino group-containing benzene ring is preferably a compound having the amino group-containing benzene ring and containing a primary amino group.

Examples of the compound having the amino group-containing benzene ring include aromatic monoamines and aromatic polyamines.

Examples of the aromatic monoamines include aniline, p-toluidine, p-ethylaniline, p-anisidine, p-butylaniline, p-phenetidine, and 4-aminophenol. Preferred among these are aniline and p-anisidine.

Examples of the aromatic polyamines include N,N-dimethyl-1,4-phenylenediamine, N,N-diethyl-1,4-phenylenediamine, 1,4-phenylenediamine, tolylenediamine, and 4,4'-diaminodiphenylmethane.

The aromatic polyamines preferably have an unsubstituted primary amino group as a first amino group. The aromatic polyamine has an electron-donating alkyl, amino, or alkoxy group preferably at an ortho position or a para position, more preferably the para position, to the amino group. A second or further amino group or alkoxy group substituted at the para position is preferably substituted by an alkyl group such that the amino group or the alkoxy group has no active hydrogen. Preferred is specifically the aromatic polyamine having the structure of the following formula (1).

[Chem. 1]

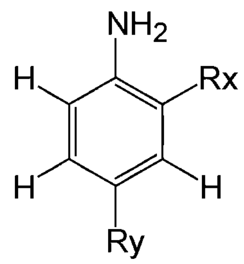

(1)

wherein, in the formula (1), $R_X$ and $R_y$ each independently represent a hydrogen atom, -OR, or -NR'R". R represents an alkyl group having 20 or less carbon atoms. R' and R" each independently represent a hydrogen atom or an alkyl group having 20 or less carbon atoms.

The compound having the amino group-containing benzene ring preferably has 1 to 3 amino groups. This reacts amino groups with the hydroxy group-containing aromatic rings sufficiently. Since the compound has the 3 or less amino groups, the amino group(s) can be moderately basic. Furthermore, the amino group(s) is/are preferably present at the end(s) of the molecule from the viewpoint that the amino group(s) is/are less likely to be sterically hindered during the reaction.

The organic black compound contains the structural unit derived from the compound having the amino group-containing benzene ring in an amount of preferably 10% by weight or more and 60% by weight or less, more preferably 20% by weight or more and 50% by weight or less, further preferably 30% by weight or more and 45% by weight or less.

The organic black compound may have a structural unit derived from an amino group-containing compound other than the compound having the amino group-containing benzene ring.

Examples of the amino group-containing compound include chain aliphatic amines, alicyclic amines, and alkanolamine besides ammonia.

Examples of the chain aliphatic amines include ethylamine, 1-propylamine, 2-propylamine, 1-butylamine, 1-pentylamine, 1-hexylamine, 1-heptylamine, 1-octylamine, 1-laurylamine, 1,2-ethanediamine, 1,3-propanediamine, 1,4-butanediamine, 1,5-pentanediamine, 1,6-hexanediamine, ethylenetriamine, diethylenetriamine, ethylhydrazine, 1-propylhydrazine, 1-butylhydrazine, 1-pentylhydrazine, 1-hexylhydrazine, 1-heptylhydrazine, 1-octylhydrazine, succinic acid dihydrazide, terephthalic acid dihydrazide, guanidine, 1-butylguanidine, 1-cyanoguanidine, and dicyandiamide.

Examples of the alicyclic amines include cyclopropylamine, cyclobutylamine, cyclopentylamine, cyclohexylamine, cyclopropanediamine, isophoronediamine, cyclobutanediamine, cyclopentanediamine, cyclohexanediamine, bis(4-aminocyclohexyl)methane, piperazine, and N-aminoethylpiperazine.

Examples of the alkanolamines include monoethanolamine, diethanolamine, and triethanolamine.

The organic black compound having the structural unit derived from the compound having the hydroxy group-containing aromatic ring and the structural unit derived from the compound having the amino group-containing benzene ring preferably contains an auxochrome.

Examples of the auxochrome include the above-described amino groups as well as a thiol group, an aldehyde group, a carboxy group, and a hydroxy group. The organic black compound may contain only one auxochrome or contain two or more auxochromes.

The organic black compound is preferably oxidized with an oxidizer.

When the black particles have the composition, the black particles can be prepared having very high light-shielding properties in the visible region and very high transparency in the near-infrared region.

Examples of the oxidizer include ketone compounds, peroxides, organic acids, persulfates, nitrates, amine oxide compounds, salts of halogen oxoacids, and hydrazine.

Examples of the ketone compounds include quinone compounds such as benzoquinone, 1,2-naphthoquinone, anthraquinone, and chloranil.

Examples of the peroxides include hydrogen peroxide, and t-butylhydroperoxide.

Examples of the organic acids include formic acid, acetic acid, and propionic acid.

Examples of the persulfates include sodium persulfate, potassium persulfate, and ammonium persulfate.

Examples of the nitrates include sodium nitrate, ammonium nitrate, and ammonium cerium nitrate.

Examples of the amine oxide compounds include N-methylmorpholine N-oxide.

Examples of the salts of the halogen oxoacids include sodium hypochlorite and sodium chlorite.

The oxidizers may be used alone or in combination of two or more.

Above all, ketone compounds, peroxides, organic acids, persulfates, and hydrazine are preferable. The combined use of a ketone compound and a peroxide is preferable.

The oxidizer is different from the compound having the hydroxy group-containing aromatic ring, the compound

having the amino group-containing benzene ring, and the other amino group-containing compound.

When the near-infrared transmitting black particles contain the organic black compound oxidized with the oxidizer, the weight ratio of the oxidizer to be used to the structural unit derived from the compound having the hydroxy group-containing aromatic ring (oxidizer/ structural unit derived from the compound having the hydroxy group-containing aromatic ring) is preferably 0.1 or more, preferably 5 or less, more preferably 0.2 or more, more preferably 3 or less, further preferably 0.3 or more, further preferably 2 or less.

The weight ratio can be calculated based on the amounts of the components added.

Preferably, the near-infrared transmitting black particles contain the organic black compound oxidized with the oxidizer and contain no oxidizer.

When the near-infrared transmitting black particles contain the organic black compound oxidized with the oxidizer, the weight ratio of the oxidizer to be used to the structural unit derived from the compound having the amino group-containing benzene ring (oxidizer/ structural unit derived from the compound having the amino group-containing benzene ring) is preferably 0.1 or more, preferably 10 or less, more preferably 0.5 or more, more preferably 8 or less, further preferably 1 or more, further preferably 6 or less.

The weight ratio can be calculated based on the amounts of the components added.

Preferably, the near-infrared transmitting black particles contain the organic black compound oxidized with the oxidizer and contains no oxidizer.

The organic black compound preferably has the structural unit in which the structural unit derived from the compound having the hydroxy group-containing aromatic ring or the structural unit derived from the compound having the amino group-containing benzene ring is oxidized.

When the near-infrared transmitting black particles have the composition, the near-infrared transmitting black particles have enhanced light-shielding properties in the visible region and enhanced transparency in the near-infrared region. Furthermore, the near-infrared transmitting black particles suppress light scattering in the near-infrared region to enable manufacturing a higher-performance optical film.

Various NMR measurements such as $^1$H NMR measurement and $^{13}$C NMR measurement can confirm that the organic black compound has the structural unit in which the structural unit derived from the compound having the hydroxy group-containing aromatic ring or the structural unit derived from the compound having the amino group-containing benzene ring is oxidized.

The organic black compound has a number average molecular weight of preferably 2,000 or less, more preferably 1,500 or less, further preferably 1,000 or less, preferably 300 or more, more preferably 400 or more.

The number average molecular weight can be determined by LC/MS.

The near-infrared transmitting black particles preferably contain a crosslinking agent or a structural unit derived from the crosslinking agent.

When the near-infrared transmitting black particles have the composition, this enables crosslinking the organic black compound having the structural unit derived from the compound having the hydroxy group-containing aromatic ring and the structural unit derived from the compound having the amino group-containing benzene ring to resinify the components, resulting in highly handleable black particles. In this case, the organic black compound has a structure with the structural unit derived from the compound having the hydroxy group-containing aromatic ring, the structural unit derived from the compound having the amino group-containing benzene ring, and the structural unit derived from the crosslinking agent.

The crosslinking agent is different from the compound having the hydroxy group-containing aromatic ring, the compound having the amino group-containing benzene ring, and the other amino group-containing compound.

The crosslinking agent is preferably an electrophilic reaction agent susceptible to nucleophilic attack.

Examples of the crosslinking agent include polyamine crosslinking agents, thiourea crosslinking agents, thiadiazole crosslinking agents, triazine crosslinking agents, quinoxaline crosslinking agents, bisphenol crosslinking agents, organic peroxide crosslinking agents, aldehyde crosslinking agents, and silane crosslinking agents. Phenol crosslinking agents such as resol phenol resins can also be used.

Examples of the polyamine crosslinking agents include ethylenediamine, hexamethylenediamine, diethylenetriamine, triethylenetetramine, hexamethylenetetramine, p-phenylenediamine, cumenediamine, N,N'-dicinnamylidene-1,6-hexanediamine, ethylenediamine carbamate, and hexamethylenediamine carbamate.

Examples of the thiourea crosslinking agents include 2-mercaptoimidazoline (ethylene thiourea), 1,3-diethylthiourea, 1,3-dibutylthiourea, and trimethylthiourea.

Examples of the thiadiazole crosslinking agents include 2,5-dimercapto-1,3,4-thiadiazole, and 2-mercapto-1,3,4-thiadiazole-5-thiobenzoate.

Examples of the triazine crosslinking agents include 2,4,6-trimercapto-1,3,5-triazine, 2-hexylamino-4,6-dimercaptotriazine, 2-diethylamino-4,6-dimercaptotriazine, 2-cyclohexylamino-4,6-dimercaptotriazine, 2-dibutylamino-4,6-dimercaptotriazine, 2-anilino-4,6-dimercaptotriazine, and 2-phenylamino-4,6-dimercaptotriazine.

Examples of the quinoxaline crosslinking agents include 2,3-dimercaptoquinoxaline, quinoxaline-2,3-dithiocarbonate, 6-methylquinoxaline-2,3-dithiocarbonate, and 5,8-dimethylquinoxaline-2,3-dithiocarbonate.

Examples of the bisphenol crosslinking agents include bisphenol AF and bisphenol S.

Examples of the organic peroxide crosslinking agents include tert-butyl hydroperoxide, p-menthane hydroperoxide, dicumyl peroxide, tert-butyl peroxide, 1,3-bis(tert-butylperoxyisopropyl)benzene, 2,5-dimethyl-2,5-di(tert-butylperoxy)hexane, benzoyl peroxide, and tert-butyl peroxybenzoate.

Examples of the aldehyde crosslinking agents include glyoxal, malondialdehyde, succindialdehyde, maleindialdehyde, glutaric dialdehyde, formaldehyde, acetaldehyde, benzaldehyde, and 1,3,5-trioxane.

Examples of the silane crosslinking agents include alkoxysilanes such as methyltrimethoxysilane, dimethyldimethoxysilane, vinyltrimethoxysilane, phenyltrimethoxysilane, and methyltriethoxysilane.

Preferred among these are the polyamine crosslinking agents and the aldehyde crosslinking agents from the standpoint of ease of addition (solubility in solvent) and high reactivity [the carbon atoms adjacent to electron-withdrawing atoms have a relatively large space therearound (the carbon atoms are less sterically hindered)].

When the near-infrared transmitting black particles contain the organic black compound having the structural unit derived from the compound having the hydroxy group-containing aromatic ring and the structural unit derived from the compound having the amino group-containing benzene ring, the weight ratio of the structural unit derived from the compound having the amino group-containing benzene ring to the structural unit derived from the compound having the hydroxy group-containing aromatic ring (structural unit derived from compound having amino group-containing benzene ring/structural unit derived from the compound having hydroxy group-containing aromatic ring) is preferably 0.1 or more, preferably 10 or less, more preferably 0.2 or more, more preferably 5 or less, further preferably 0.25 or more, further preferably 3.5 or less. When the weight ratio is in the range, this enables further improving the light-shielding properties in the visible region and further improving the transparency in the infrared region.

When the near-infrared transmitting black particles contain the organic black compound having the structural unit derived from the compound having the hydroxy group-containing aromatic ring and the structural unit derived from the crosslinking agent, the weight ratio of the structural unit derived from the crosslinking agent to the structural unit derived from the compound having the hydroxy group-containing aromatic ring (structural unit derived from crosslinking agent/structural unit derived from compound having hydroxy group-containing aromatic ring) is preferably 0.1 or more, preferably 10 or less, more preferably 0.2 or more, more preferably 5 or less, further preferably 0.3 or more, further preferably 2 or less.

When the near-infrared transmitting black particles contain the organic black compound having the structural unit derived from the compound having the amino group-containing benzene ring and the structural unit derived from the crosslinking agent, the weight ratio of the structural unit derived from the crosslinking agent to the structural unit derived from the compound having the amino group-containing benzene ring (structural unit derived from crosslinking agent/-structural unit derived from compound having amino group-containing benzene ring) is preferably 0.1 or more, preferably 10 or less, more preferably 0.5 or more, more preferably 5 or less, further preferably 1 or more, further preferably 2 or less.

The near-infrared transmitting black particles have an average particle size of preferably 0.1 nm or more, preferably 1 μm or less.

When the average particle size is in the range, this enables forming a uniform coating film to manufacture a higher-performance optical film.

The average particle size is more preferably 10 nm or more, more preferably 100 nm or less.

The CV value of particle size of the near-infrared transmitting black particles is preferably 15% or less, more preferably 10% or less.

When the CV value is in the range, this enables forming a uniform coating film.

The CV value (%) of the particle size is the standard deviation divided by the average particle size , expressed in percentage. The CV value can be a numerical value according to the following expression. A lower CV value means that the particle size is more uniform.

CV value (%) of particle size = (standard deviation of particle size/average particle size) × 100

For example, the average particle size and the standard deviation can be determined as follows: any 100 particles in an image obtained by SEM are measured for particle size to calculate the average of the particle sizes.

Examples of the method for producing the near-infrared transmitting black particles include a method involving reacting the compound having the hydroxy group-containing aromatic ring with the compound having the amino group-containing benzene ring to prepare the organic black compound and further adding the oxidizer to oxidize the organic black compound. In addition, examples also include mixing and reacting the compound having the hydroxy group-containing aromatic ring, the compound having the amino group-containing benzene ring, and the crosslinking agent to prepare the organic black compound and further adding the oxidizer to oxidize the organic black compound. Furthermore, examples also include mixing and reacting the compound having the hydroxy group-containing aromatic ring, the compound having

the amino group-containing benzene ring, the crosslinking agent, and the oxidizer.

Specific examples include a method involving preparing a solution containing the compound having the hydroxy group-containing aromatic ring, dropping a solution of the compound having the amino group-containing benzene ring thereinto, resulting in the reaction, and further adding a solution of a crosslinking agent as needed to prepare the organic black compound, adding an oxidizer solution thereto, resulting in oxidization.

In the reaction, the weight ratio of the compound having the amino group-containing benzene ring to the compound having the hydroxy group-containing aromatic ring (compound having amino group-containing benzene ring/compound having hydroxy group-containing aromatic ring) is preferably 0.1 or more, preferably 10 or less, more preferably 0.2 or more, more preferably 5 or less, further preferably 0.25 or more, further preferably 3.5 or less. When the weight ratio is in the range, this enables improving visible light-blocking properties and improving infrared transparency.

In the reaction, the weight ratio of the crosslinking agent to the compound having the hydroxy group-containing aromatic ring (crosslinking agent/compound having hydroxy group-containing aromatic ring) is preferably 0.1 or more, preferably 10 or less, more preferably 0.2 or more, more preferably 5 or less, further preferably 0.3 or more, further preferably 2 or less.

In the reaction, the weight ratio of the crosslinking agent to the compound having the amino group-containing benzene ring (crosslinking agent/compound having amino group-containing benzene ring) is preferably 0.1 or more, preferably 10 or less, more preferably 0.5 or more, more preferably 5 or less, further preferably 1 or more, further preferably 2 or less.

The reaction temperature is preferably 10°C or more, preferably 100°C or less, more preferably 20°C or more, more preferably 80°C or less.

The reaction time is preferably 4 hours or more, preferably 72 hours or less, more preferably 6 hours or more, more preferably 48 hours or less.

When the reaction temperature and the reaction time are in the ranges, respectively, the average particle size can be adjusted to a suitable range.

When 70% by weight or more of the raw materials have been reacted upon measuring the amount of remaining raw materials in the reaction solution, the reaction is determined to have been completed.

The amounts of the remaining raw materials can be confirmed by heating the reaction solution to temperature at or above the volatilization temperatures of the compound having the hydroxy group-containing aromatic ring and the compound having the amino group-containing benzene ring to dryness, followed by the measurement of the residual solid content or measurement using the quantitative analysis by gas chromatography.

In the reaction, additives are preferably added.

Examples of the additives include halogen compounds of iodine, bromine, and chlorine; protonic acids such as sulfuric acid, hydrochloric acid, nitric acid, perchloric acid, fluoroboric acid, and phosphinic acid; various salts of these protonic acids; Lewis acids such as aluminum trichloride, iron trichloride, molybdenum chloride, antimony chloride, arsenic pentafluoride, and antimony pentafluoride; organic carboxylic acids such as acetic acid, trifluoroacetic acid, polyethylene carboxylic acid, formic acid, benzoic acid, and citric acid; various salts of these organic carboxylic acids; phenols such as phenol, nitrophenol, and cyanophenol; and various salts of these phenols; sulfosuccinic acids such as di-2-ethylhexylsulfosuccinic acid and sulfosuccinic acid; salts of sulfosuccinic acids; polymer acids such as polyacrylic acid; alkyl phosphate esters such as propyl phosphate ester, butyl phosphate ester, and hexyl phosphate ester; polyalkylene oxide phosphate esters such as polyethylene oxide dodecyl ether phosphate ester and polyethylene oxide alkyl ether phosphate esters; various salts of alkyl phosphate esters and polyalkylene oxide phosphate esters; sulfate esters such as lauryl sulfate ester, cetyl sulfate ester, stearyl sulfate ester, and lauryl ether sulfate ester; and various salts of these sulfate esters.

The oxidization temperature is preferably 10°C or more, preferably 100°C or less, more preferably 20°C or more, more preferably 80°C or less.

The oxidization time is preferably 0.5 hours or more, preferably 24 hours or less, more preferably 1 hour or more, more preferably 12 hours or less.

In the oxidization step, the weight ratio of the oxidizer to the organic black compound (oxidizer/organic black compound) is preferably 0.01 or more, preferably 10 or less, more preferably 0.1 or more, more preferably 5 or less.

In the method for preparing the near-infrared transmitting black particles, a drying step may be further performed.

The drying temperature in the drying step is preferably 80°C or more, preferably 200°C or less.

The drying time is preferably 1 hour or more, preferably 48 hours or less.

The near-infrared transmitting black particles can be used for purposes such as coating films such as optical films, black coating materials, black matrices for color filters, and inks for infrared sensors. Especially since the near-infrared transmitting black particles not only balance the light-shielding properties in the visible region with the transparency in the near-infrared region, but also suppress light scattering in the near-infrared region, the near-infrared transmitting black particles can be used for applications such as optical films suitable for near-infrared sensors, near-infrared cameras, or others for smartphones, cars, or others.

When the near-infrared transmitting black particles are used to produce coating films, black coating materials, black matrices for color filters, or inks for infrared sensors, the light transmittance thereof is affected by the dispersion medium and the method for dispersing the near-infrared transmitting black particles, the binder resin for forming the coating film, the particle content, and the coating film thickness. The dispersion medium can be selected from solvents varying from hydrophilic solvents to hydrophobic solvents. The particle content can be preferably 20 parts by weight or more relative to 100 parts by weight of the binder resin. The coating film thickness is preferably 30 $\mu$m or less.

The ink can also be prepared by mixing the near-infrared transmitting black particles, a solvent, a binder resin, and other components. The present invention also encompasses an ink containing the near-infrared transmitting black particles, a solvent, and a binder resin.

The ink can be applied to a substrate and dried to remove the solvent, resulting in a formed article such as an optical film. The present invention also encompasses a formed article containing the near-infrared transmitting black particles and a binder resin.

Examples of the binder resin include polyvinyl acetal resins such as polyvinyl formal resin and polyvinyl butyral resin; (meth)acrylic resin; (meth)acrylic urethane resin, urethane resin; polyvinyl chloride resin; melamine resin; styrene resin; epoxy resin; and polyester resin.

Examples of the method for manufacturing the optical film include a method involving mixing the near-infrared transmitting black particles, the binder resin, the solvent, and other components with a stirrer to prepare a composition containing the near-infrared transmitting black particles and applying this to a substrate, followed by drying.

The black matrix can be formed as follows. First, the near-infrared transmitting black particles of the present invention, a curable compound, and optional components such as a curing agent and a solvent are mixed with a stirrer to prepare a composition containing the near-infrared transmitting black particles.

Next, the composition is applied to a substrate and dried to form a coating film.

The obtained coating film can be partially exposed via a negative mask to active energy rays such as UV light or excimer laser light to form a black matrix having a predetermined pattern.

The operations in the method for forming the black matrix can be performed also on a photosensitive resin composition in which red pigment is dispersed, a photosensitive resin composition in which green pigment is dispersed, and a photosensitive resin composition in which blue pigment is dispersed, so that the pixel patterns of these colors can be formed to shape a color filter.

Conventionally known photosensitive resin compositions can be used as the photosensitive resin composition in which the red pigment is dispersed, the photosensitive resin composition in which the green pigment is dispersed, and the photosensitive resin composition in which the blue pigment is dispersed.

The color filter can also be produced by ejecting red, green, and blue inks from ink-jet nozzles to respective regions divided by the black matrix and curing the remaining inks by heat or light.

The color filter can be suitably used as a component for displays such as liquid crystal displays and organic electroluminescence displays.

- Advantageous Effects of Invention

The present invention enables providing near-infrared transmitting black particles that enable manufacturing a high-performance optical film that has high design properties, and contributes to retinal safety, sensor precision, and sensor sensitivity.

BRIEF DESCRIPTION OF DRAWINGS

FIG. 1 is a graph obtained by measuring the total light transmittances of the coating films obtained in Examples 1 to 5 (horizontal axis: wavelength, vertical axis: transmittance).

FIG. 2 is a graph obtained by measuring the total light transmittances of the coating films obtained in Examples 6 to 9 (horizontal axis: wavelength, vertical axis: transmittance).

FIG. 3 is a graph obtained by measuring the total light transmittances of the coating films obtained in Comparative Examples 1 to 5 (horizontal axis: wavelength, vertical axis: transmittance).

DESCRIPTION OF EMBODIMENTS

Although embodiments of the present invention will be described in further detail with reference to Examples hereinafter, the present invention is not limited to only these Examples.

(Example 1)

To a mixed solution of 0.002 L of 2-propanol and 0.005 L of water was added 0.098 g of 1-naphthol (available from FUJIFILM Wako Pure Chemical Corporation), followed by stirring, resulting in a 1-naphthol solution.

With the 1-naphthol solution was mixed 0.028 g of N,N-dimethyl-1,4-phenylenediamine (available from Tokyo Chemical Industry Co., Ltd.) to obtain a mixed solution.

The mixed solution was stirred at room temperature (25°C) for 0.5 hours and then warmed to 41°C, followed by further stirring for 3 hours. To the mixed solution was added 0.042 g of 1,3,5-trioxane (available from Tokyo Chemical Industry Co., Ltd.), followed by stirring for 3 hours. The mixture was then warmed to 53°C and further stirred for 6 hours. The mixture was then cooled to room temperature to obtain a particulate dispersion.

To the obtained particulate dispersion was added 0.050 g of ammonium persulfate (available from Tokyo Chemical Industry Co., Ltd.). The mixture was warmed to 41°C and further stirred for 5 hours for oxidization.

The obtained oxidized particulate dispersion was subjected to solid-liquid separation. The resultant was vacuum-dried at 65°C for 5 hours to obtain black particles containing an organic black compound having a structural unit derived from a compound having a hydroxy group-containing aromatic ring and a structural unit derived from a compound having an amino group-containing benzene ring and oxidized with the oxidizer.

Then, 0.050 g of the obtained black particles was weighed in a vial, followed by addition of 0.100 g of cyclohexanone. The mixture was shaken with a vibrator for several seconds to be blended. The mixture was further sonicated at 28 kHz for 30 minutes to obtain a black particle dispersion.

To the obtained black particle dispersion was added 0.500 g of a 20% by weight solution of polyvinyl butyral resin (S-LEC BL-5Z, available from SEKISUI CHEMICAL CO., LTD.) in cyclohexanone. The mixture was shaken with a vibrator for several seconds to be blended. The mixture was further sonicated at 28 kHz for 30 minutes to obtain a coating liquid.

The obtained coating liquid was applied to a slide glass with a coater such that the film thickness after drying was 5 μm. The coating liquid was dried at 90°C to form a coating film (film thickness: 5 μm) on the slide glass.

(Example 2)

The same procedure as in Example 1 was performed except that 0.050 g of 1,4-benzoquinone (available from FUJIFILM Wako Pure Chemical Corporation), 0.050 g of hydrogen peroxide (available from SANTOKU CHEMICAL INDUSTRIES CO., LTD.), and 0.050 g of hydrazine (available from FUJIFILM Wako Pure Chemical Corporation) were used instead of ammonium persulfate. This yielded black particles containing an organic black compound having a structural unit derived from a compound having a hydroxy group-containing aromatic ring and a structural unit derived from a compound having an amino group-containing benzene ring, the organic black compound being oxidized with the oxidizer. This also yielded a coating film.

(Example 3)

The same procedure as in Example 1 was performed except that 0.050 g of 1,4-benzoquinone and 0.050 g of formic acid (available from FUJIFILM Wako Pure Chemical Corporation) were used instead of ammonium persulfate. This yielded black particles containing an organic black compound having a structural unit derived from a compound having a hydroxy group-containing aromatic ring and a structural unit derived from a compound having an amino group-containing benzene ring, the organic black compound being oxidized with the oxidizer. This also yielded a coating film.

(Example 4)

The same procedure as in Example 1 was performed except that 0.050 g of 1,4-benzoquinone and 0.050 g of hydrogen peroxide were used instead of ammonium persulfate. This yielded black particles containing an organic black compound having a structural unit derived from a compound having a hydroxy group-containing aromatic ring and a structural unit derived from a compound having an amino group-containing benzene ring, the organic black compound being oxidized with the oxidizer. This also yielded a coating film. The organic black compound had a number average molecular weight of 418 as measured by LC/MS.

(Example 5)

The same procedure as in Example 1 was performed except that 0.050 g of 1,4-benzoquinone was used instead of ammonium persulfate. This yielded black particles containing an organic black compound having a structural unit derived from a compound having a hydroxy group-containing aromatic ring and a structural unit derived from a compound having an amino group-containing benzene ring, the organic black compound being oxidized with the oxidizer. This also

yielded a coating film.

(Example 6)

The same procedure as in Example 1 was performed except that 0.320 g of N,N-dimethyl-1,4-phenylenediamine was used, and 0.050 g of 1,4-benzoquinone was used instead of ammonium persulfate. This yielded black particles containing an organic black compound having a structural unit derived from a compound having a hydroxy group-containing aromatic ring and a structural unit derived from a compound having an amino group-containing benzene ring, the organic black compound being oxidized with the oxidizer. This also yielded a coating film.

(Example 7)

The same procedure as in Example 1 was performed except that 0.042 g of hexamethylenetetramine was used instead of 1,3,5-trioxane, and 0.050 g of 1,4-benzoquinone was used instead of ammonium persulfate. This yielded black particles containing an organic black compound having a structural unit derived from a compound having a hydroxy group-containing aromatic ring and a structural unit derived from a compound having an amino group-containing benzene ring, the organic black compound being oxidized with the oxidizer. This also yielded a coating film.

(Example 8)

The same procedure as in Example 1 was performed except that 0.028 g of N,N-diethyl-1,4-phenylenediamine was used instead of N,N-dimethyl-1,4-phenylenediamine, and 0.050 g of 1,4-benzoquinone was used instead of ammonium persulfate. This yielded black particles containing an organic black compound having a structural unit derived from a compound having a hydroxy group-containing aromatic ring and a structural unit derived from a compound having an amino group-containing benzene ring, the organic black compound being oxidized with the oxidizer. This also yielded a coating film.

(Example 9)

The same procedure as in Example 1 was performed except that 0.100 g of 1,5-dihydroxynaphthalene was used instead of 1-naphthol, and 0.050 g of 1,4-benzoquinone was used instead of ammonium persulfate. This yielded black particles containing an organic black compound having a structural unit derived from a compound having a hydroxy group-containing aromatic ring and a structural unit derived from a compound having an amino group-containing benzene ring, the organic black compound being oxidized with the oxidizer. This also yielded a coating film.

(Comparative Example 1)

The same procedure as in Example 1 was performed except that ammonium persulfate was not added. This yielded black particles and a coating film.

(Comparative Example 2)

The same procedure as in Example 1 was performed except that a 1-naphthol solution was not added, 0.100 g of 4-aminopyridine (available from Tokyo Chemical Industry Co., Ltd.) was used instead of N,N-dimethyl-1,4-phenylenediamine, 0.080 g of 1,3,5-trioxane was used, and 0.050 g of 1,4-benzoquinone was used instead of ammonium persulfate. This yielded black particles and a coating film.

(Comparative Example 3)

The same procedure as in Example 1 was performed except that 0.100 g of 1,5-dihydroxynaphthalene (available from Tokyo Chemical Industry Co., Ltd.) was used instead of 1-naphthol, 0.030 g of dinaphthylenediamine (available from Tokyo Chemical Industry Co., Ltd.) was used instead of N,N-dimethyl-1,4-phenylenediamine, and 0.040 g of 1,3,5-trioxane was used. This yielded black particles and a coating film.

(Comparative Example 4)

The same procedure as in Example 1 was performed except that 0.100 g of 1,5-dihydroxynaphthalene (available from Tokyo Chemical Industry Co., Ltd.) was used instead of 1-naphthol, 0.030 g of 4-aminopyridine (available from Tokyo

Chemical Industry Co., Ltd.) was used instead of N,N-dimethyl-1,4-phenylenediamine, and 0.040 g of hexamethylenetetramine was used instead of 1,3,5-trioxane, and ammonium persulfate was not added. This yielded black particles and a coating film.

(Comparative Example 5)

The same procedure as in Example 1 was performed except that 0.025 g of 1,5-dihydroxynaphthalene (available from Tokyo Chemical Industry Co., Ltd.) was used instead of 1-naphthol, 0.028 g of acetylpyrrole (available from Tokyo Chemical Industry Co., Ltd.) was used instead of N,N-dimethyl-1,4-phenylenediamine, and 0.075 g of hydrogen peroxide was used instead of ammonium persulfate. This yielded black particles and a coating film.

(Comparative Example 6)

The same procedure as in Example 1 was performed except that 1-naphthol was not added, 0.100 g of acetylpyrrole (available from Tokyo Chemical Industry Co., Ltd.) was used instead of N,N-dimethyl-1,4-phenylenediamine, 1,3,5-trioxane was not added, and 0.100 g of 1,4-benzoquinone was used instead of ammonium persulfate. This yielded black particles. Although it was attempted to form a coating film using the obtained black particles in the same way as in Example 1, a uniform coating film was not able to be obtained.

(Evaluation)

The black particles and the coating films obtained in Examples and Comparative Examples were evaluated as follows. Tables 2 and 3 show the results.

(1) Total light transmittance

The light transmittances of the obtained coating films in the wavelength region from 200 to 2,500 nm were measured using a spectrophotometer with an integrating sphere (available from Hitachi, Ltd., model U-4100). In the measurement, the total light transmittance was measured, a reflective plate being installed opposite to the ray incident side.

The measurement conditions were set as follows:

[Measurement mode: wavelength scan, Data mode: %T, Starting wavelength: 2,500.00 nm, Ending wavelength: 200.00 nm, Scan speed: 600 nm/min, Sampling interval: 5.00 nm, Initial latency: 0 s, Repetition period: 0.0 min, Number of measurements: 1, Auto zero prior to measurement: OFF, Slit: 8.00 nm, Photomultiplier tube voltage: auto 1, Light source switch mode: auto switch, Light source switch wavelength: 340.00 nm, Baseline setting: user 1, High resolution setting: OFF, D2 lamp: On, W1 lamp: On, R/S inversion: OFF, Neutral density filter damping factor: no use of neutral density filter], [Near-infrared; Scan speed: 750 nm, Slit: automatic control, PbS sensitivity: 2, Detector switch correction: not corrected, Detection switch wavelength: 850.0 nm, Light control mode: fixed], [Peak detection; Detection method: Rectangular, Sensitivity: 1, Threshold: 0.01]

Subsequently, using the transmittances measured at intervals of 5 nm, calculations were made to determine the average transmittance in the wavelength region of 400 nm or more and less than 800 nm (400 to 795 nm), the average transmittance in the wavelength region of 700 nm or more and less than 850 nm (700 to 845 nm), the average transmittance in the wavelength region of 850 nm or more and less than 2,500 nm (850 to 2,495 nm).

Furthermore, the wavelength $\lambda_{min}$ at the minimum transmittance and the wavelength $\lambda_{max}$ at a transmittance of 90% were determined from the transmittances at intervals of 5 nm in the wavelength region of 400 nm or more and 2,500 nm or less to calculate the difference therebetween.

FIGS. 1 to 3 show graphs (horizontal axis: wavelength, vertical axis: transmittance) obtained in measurement of the total light transmittances of Examples 1 to 9 and Comparative Examples 1 to 5.

The results of the measurement were evaluated according to the following criteria.

(Design properties)

(Average transmittance in wavelength region of 400 nm or more and less than 800 nm)

A: 5% or less
B: More than 5% and 15% or less

C: More than 15% and 25% or less
D: More than 25%

When the average transmittance in the wavelength region of 400 nm or more and less than 800 nm is low, the obtained optical film has high design properties.

(Retinal safety)

(Transmittance $T_{700}$ at a wavelength of 700 nm)

A: 1% or less
B: More than 1% and 10% or less
C: More than 10% and 36% or less
D: More than 36%

(Average transmittance in wavelength region of 700 nm or more and less than 850 nm)

A: 30% or less
B: More than 30% and 45% or less
C: More than 45% and 60% or less
D: More than 60%

When the average transmittance in the wavelength region of 700 nm or more and less than 850 nm is low, the retinal safety is particularly high.

($\lambda_{max}$ - $\lambda_{min}$)

A: 250 nm or less
B: More than 250 nm and 300 nm or less
C: More than 300 nm and 630 nm or less
D: More than 630 nm

(Sensor sensitivity)

(Transmittance $T_{900}$ at a wavelength of 900 nm)

A: 90% or more
B: 80% or more and less than 90%
C: 70% or more and less than 80%
D: less than 70%

(Transmittance $T_{905}$ at a wavelength of 905 nm)

A: 90% or more
B: 80% or more and less than 90%
C: 75% or more and less than 80%
D: less than 75%

(Transmittance $T_{940}$ at a wavelength of 940 nm)

A: 90% or more
B: 80% or more and less than 90%
C: 75% or more and less than 80%
D: less than 75%

(Transmittance $T_{1,550}$ at a wavelength of 1,550 nm)

A: 99% or more
B: 95% or more and less than 99%
C: 90% or more and less than 95%
D: less than 90%

(Average transmittance in the wavelength region of 850 nm or more and less than 2,500 nm)

A: 95% or more
B: 90% or more and less than 95%
C: 80% or more and less than 90%
D: less than 80%

When the average transmittance in the wavelength region of 850 nm or more and 2,500 or less is high, a high-performance optical film is obtained that contributes to high sensor sensitivity. Since the optical film contributes to high sensor sensitivity, the power consumption of various information terminals or others can be reduced.

(2) Diffuse transmittance

The coating films used in the measurement in (1) Total light transmittance were measured for diffuse transmittance using a spectrophotometer with an integrating sphere (available from Hitachi, Ltd., model U-4100), the reflective plate opposed to the ray incident side being removed such that while parallel rays did not remain in the integrating sphere, only diffuse light remained in the integrating sphere.
Based on the measurement results, the maximum of the diffuse transmittance in the wavelength region of 850 nm or more and less than 2,500 nm was evaluated according to the following criteria.

(Sensor precision)

A: 1% or less
B: More than 1% and 3% or less
C: More than 3% and 5% or less
D: More than 5%

When the diffuse transmittance is low, a high-performance optical film can be obtained that achieves low sensor noise, and contributes to the sensor precision. This enables providing a more precise optical film for near-infrared sensors or near-infrared cameras.

[Table 1]

| | Compound having hydroxy group-containing aromatic ring | | Compound having amino group-containing aromatic ring | | Crosslinking agent | | Oxidizer | |
|---|---|---|---|---|---|---|---|---|
| | Type | Added amount (g) | Type | Added amount (g) | Type | Added amount (g) | Type | Added amount (g) |
| Example 1 | 1-Naphthol | 0.098 | N,N-Dimethyl-1,4-phenylenediamine | 0.028 | 1,3,5-Trioxane | 0.042 | Ammonium persulfate | 0.050 |
| Example 2 | 1-Naphthol | 0.098 | N,N-Dimethyl-1,4-phenylenediamine | 0.028 | 1,3,5-Trioxane | 0.042 | 1,4-Benzoquinone | 0.050 |
| | | | | | | | Hydrogen peroxide | 0.050 |
| | | | | | | | Hydrazine | 0.050 |
| Example 3 | 1-Naphthol | 0.098 | N,N-Dimethyl-1,4-phenylenediamine | 0.028 | 1,3,5-Trioxane | 0.042 | 1,4-Benzoquinone | 0.050 |
| | | | | | | | Formic acid | 0.050 |
| Example 4 | 1-Naphthol | 0.098 | N,N-Dimethyl-1,4-phenylenediamine | 0.028 | 1,3,5-Trioxane | 0.042 | 1,4-Benzoquinone | 0.050 |
| | | | | | | | Hydrogen peroxide | 0.050 |
| Example 5 | 1-Naphthol | 0.098 | N,N-Dimethyl-1,4-phenylenediamine | 0.028 | 1,3,5-Trioxane | 0.042 | 1,4-Benzoquinone | 0.050 |
| Example 6 | 1-Naphthol | 0.098 | N,N-Dimethyl-1,4-phenylenediamine | 0.320 | 1,3,5-Trioxane | 0.042 | 1,4-Benzoquinone | 0.050 |
| Example 7 | 1-Naphthol | 0.098 | N,N-Dimethyl-1,4-phenylenediamine | 0.280 | Hexamethylenetetramine | 0.042 | 1,4-Benzoquinone | 0.050 |
| Example 8 | 1-Naphthol | 0.098 | N,N-Diethyl-1,4-phenylenediamine | 0.280 | 1,3,5-Trioxane | 0.042 | 1,4-Benzoquinone | 0.050 |
| Example 9 | 1,5-Dihydroxynaphthalene | 0.100 | N,N-Dimethyl-1,4-phenylenediamine | 0.320 | 1,3,5-Trioxane | 0.042 | 1,4-Benzoquinone | 0.050 |
| Comparative Example 1 | 1-Naphthol | 0.098 | N,N-Dimethyl-1,4-phenylenediamine | 0.028 | 1,3,5-Trioxane | 0.042 | - | - |

(continued)

| | Compound having hydroxy group-containing aromatic ring | | Compound having amino group-containing aromatic ring | | Crosslinking agent | | Oxidizer | |
|---|---|---|---|---|---|---|---|---|
| | Type | Added amount (g) | Type | Added amount (g) | Type | Added amount (g) | Type | Added amount (g) |
| Comparative Example 2 | - | - | 4-Aminopyridine | 0.100 | 1,3,5-Trioxane | 0.080 | 1,4-Benzoquinone | 0.050 |
| Comparative Example 3 | 1,5-Dihydroxynaphthalene | 0.100 | Dinaphthylenediamine | 0.030 | 1,3,5-Trioxane | 0.040 | Ammonium persulfate | 0.050 |
| Comparative Example 4 | 1,5-Dihydroxynaphthalene | 0.100 | 4-Aminopyridine | 0.030 | Hexamethylenetetramine | 0.040 | - | - |
| Comparative Example 5 | 1,5-Dihydroxynaphthalene | 0.025 | Acetylpyrrole | 0.028 | 1,3,5-Trioxane | 0.042 | Hydrogen peroxide | 0.075 |
| Comparative Example 6 | - | - | Acetylpyrrole | 0.100 | - | - | 1,4-Benzoquinone | 0.100 |

[Table 2]

| | Total light transmittance | | | | | | | | | | | | | | | | | | Diffuse transmittance |
|---|---|---|---|---|---|---|---|---|---|---|---|---|---|---|---|---|---|---|---|
| | Transmittance (%) | | | | | | | | | | | | | | | | | | Maximum (%) at 850 nm or more and less than 2,500 nm (%) |
| | $T_{2500}$ | $T_{2000}$ | $T_{1550}$ | $T_{1500}$ | $T_{1000}$ | $T_{940}$ | $T_{905}$ | $T_{900}$ | $T_{850}$ | $T_{800}$ | $T_{750}$ | $T_{700}$ | $T_{650}$ | $T_{600}$ | $T_{500}$ | $T_{400}$ | $T_{300}$ | $T_{200}$ | |
| Example 1 | 92.6 | 95.4 | 94.5 | 94.1 | 85.5 | 79.9 | 75.3 | 74.5 | 66.1 | 57.1 | 47.4 | 35.9 | 23.5 | 13.1 | 4.4 | 6.3 | 0.0 | -0.1 | 1.3 |
| Example 2 | 97.8 | 99.9 | 99.5 | 99.5 | 97.5 | 95.3 | 93.8 | 93.7 | 88.2 | 74.8 | 46.1 | 18.1 | 7.1 | 5.7 | 16.0 | 17.3 | 0.1 | -0.3 | 0.8 |
| Example 3 | 97.9 | 98.8 | 99.1 | 99.0 | 96.6 | 93.5 | 90.3 | 89.8 | 81.0 | 60.2 | 25.8 | 5.1 | 1.0 | 0.8 | 11.2 | 18.3 | 0.0 | -0.1 | 0.9 |
| Example 4 | 96.4 | 99.3 | 99.6 | 99.5 | 96.3 | 91.6 | 86.8 | 85.8 | 70.9 | 35.4 | 3.8 | -0.1 | 0.0 | -0.1 | 0.5 | 2.4 | 0.0 | -0.1 | 0.4 |
| Example 5 | 97.9 | 99.3 | 99.4 | 99.3 | 98.3 | 97.1 | 95.9 | 95.6 | 90.8 | 76.3 | 37.5 | 5.2 | 0.2 | 0.0 | 4.8 | 12.9 | -0.1 | -0.1 | 0.7 |
| Example 6 | 97.4 | 99.2 | 99.5 | 99.4 | 94.6 | 88.7 | 83.3 | 82.4 | 65.7 | 30.4 | 2.8 | -0.1 | 0.0 | -0.1 | 3.5 | 5.2 | 0.0 | -2.2 | 0.6 |
| Example 7 | 98.0 | 98.9 | 98.9 | 98.7 | 95.7 | 92.9 | 89.3 | 88.5 | 75.1 | 33.7 | 3.4 | 0.1 | 0.0 | 0.0 | 4.4 | 5.8 | -0.1 | 0.7 | 0.4 |
| Example 8 | 98.5 | 99.6 | 99.7 | 99.7 | 97.7 | 95.7 | 93.3 | 92.8 | 83.8 | 50.5 | 10.0 | 0.3 | 0.0 | 0.0 | 4.8 | 8.6 | 0.3 | -0.2 | 0.4 |
| Example 9 | 97.9 | 99.6 | 99.8 | 99.6 | 95.3 | 90.3 | 86.0 | 85.0 | 73.6 | 43.5 | 9.7 | 0.5 | 0.0 | 0.1 | 15.1 | 13.7 | 0.1 | -0.7 | 0.4 |
| Comparative Example 1 | 95.4 | 99.3 | 99.3 | 99.4 | 98.4 | 97.2 | 95.8 | 95.5 | 92.5 | 87.1 | 76.1 | 45.3 | 8.3 | 0.5 | 0.8 | 15.6 | 0.1 | 1.0 | 0.3 |
| Comparative Example 2 | 96.5 | 97.2 | 95.3 | 94.7 | 81.3 | 77.4 | 73.7 | 73.1 | 64.2 | 52.9 | 43.9 | 36.9 | 31.6 | 30.1 | 19.1 | 5.2 | 0.0 | 0.7 | 0.5 |
| Comparative Example 3 | 96.5 | 98.0 | 98.4 | 98.2 | 95.4 | 94.6 | 93.8 | 93.7 | 92.4 | 91.5 | 89.6 | 85.3 | 77.0 | 68.8 | 60.9 | 6.6 | 0.2 | 3.1 | 3.1 |
| Comparative Example 4 | 86.2 | 91.8 | 88.9 | 88.2 | 75.4 | 71.8 | 69.3 | 69.0 | 64.0 | 56.2 | 44.7 | 29.9 | 16.5 | 12.5 | 10.6 | 9.6 | 7.6 | 5.8 | 0.8 |
| Comparative Example 5 | 95.9 | 98.1 | 98.8 | 98.7 | 87.2 | 78.4 | 71.8 | 70.6 | 59.6 | 50.1 | 42.9 | 35.8 | 28.8 | 27.1 | 38.3 | 23.4 | 0.4 | 2.4 | 5.2 |
| Comparative Example 6 | A uniform film cannot be formed. | | | | | | | | | | | | | | | | | | |

[Table 3]

| | Design properties | | Retinal safety | | | | | | Sensor sensitivity | | | | | | | | | | Sensor precision | |
|---|---|---|---|---|---|---|---|---|---|---|---|---|---|---|---|---|---|---|---|---|
| | Average transmittance (400 nm or more and less than 800 nm) | | $T_{700}$ | | Average transmittance (700 nm or more and less than 850 nm) | | λmax-λmin | | $T_{900}$ | | $T_{905}$ | | $T_{940}$ | | $T_{1550}$ | | Average transmittance (850 nm or more and less than 2 500 nm) | | Maximum diffuse transmittance (850 nm or more and less than 2,500 nm) | |
| | % | Evaluation | % | Evaluation | % | Evaluation | nm | Evaluation | % | Evaluation | % | Evaluation | % | Evaluation | % | Evaluation | % | Evaluation | % | Evaluation |
| Example 1 | 20.8 | C | 35.9 | C | 51.4 | C | 610 | C | 74.5 | C | 75.3 | C | 79.9 | C | 94.5 | C | 91.9 | B | 1.3 | B |
| Example 2 | 21.1 | C | 18.1 | C | 57.1 | C | 250 | A | 93.7 | A | 93.8 | A | 95.3 | A | 99.5 | A | 98.6 | A | 0.8 | A |
| Example 3 | 13.5 | B | 5.1 | B | 41.6 | B | 270 | B | 89.8 | B | 90.3 | A | 93.5 | A | 99.1 | A | 97.7 | A | 0.9 | A |
| Example 4 | 3.0 | A | -0.1 | A | 23.0 | A | 215 | A | 85.8 | B | 86.8 | B | 91.6 | A | 99.6 | A | 97.7 | A | 0.4 | A |
| Example 5 | 13.7 | B | 5.2 | B | 52.7 | C | 225 | A | 95.6 | A | 95.9 | A | 97.1 | A | 99.4 | A | 98.7 | A | 0.7 | A |
| Example 6 | 4.5 | A | -0.1 | A | 20.2 | A | 250 | A | 82.4 | B | 83.3 | B | 88.7 | B | 99.5 | A | 97.4 | A | 0.6 | A |
| Example 7 | 4.7 | A | 0.1 | A | 23.1 | A | 195 | A | 88.5 | B | 89.3 | B | 92.9 | A | 98.9 | B | 97.7 | A | 0.4 | A |
| Example 8 | 7.6 | B | 0.3 | A | 32.4 | B | 210 | A | 92.8 | A | 93.3 | A | 95.7 | A | 99.7 | A | 98.8 | A | 0.4 | A |
| Example 9 | 11.0 | B | 0.5 | A | 28.4 | A | 275 | B | 85.0 | B | 86.0 | B | 90.3 | A | 99.8 | A | 98.0 | A | 0.4 | A |
| Comparative Example 1 | 22.7 | C | 45.3 | D | 77.6 | D | 250 | A | 95.5 | A | 95.8 | A | 97.2 | A | 99.3 | A | 98.5 | A | 0.3 | A |
| Comparative Example 2 | 28.5 | D | 36.9 | D | 48.5 | C | 870 | D | 73.1 | C | 73.7 | D | 77.4 | C | 95.3 | B | 92.2 | B | 0.5 | A |
| Comparative Example 3 | 67.5 | D | 85.3 | D | 90.0 | D | 360 | C | 93.7 | A | 93.8 | A | 94.6 | A | 98.4 | B | 97.3 | A | 3.1 | C |
| Comparative Example 4 | 20.6 | C | 29.9 | C | 49.0 | C | 1640 | D | 69.0 | D | 69.3 | D | 71.8 | D | 88.9 | D | 85.9 | C | 0.8 | A |
| Comparative Example 5 | 35.2 | D | 35.8 | C | 46.4 | C | 630 | C | 70.6 | C | 71.8 | D | 78.4 | C | 98.8 | B | 95.2 | A | 5.2 | D |

INDUSTRIAL APPLICABILITY

The present invention enables providing near-infrared transmitting black particles that enables manufacturing a high-performance optical film that has high design properties, and contributes to retinal safety, sensor precision, and sensor sensitivity.

## Claims

1. Near-infrared transmitting black particles having

   a transmittance $T_{700}$ at a wavelength of 700 nm of less than 36%, a transmittance $T_{900}$ at a wavelength of 900 nm of 70% or more, a maximum diffuse transmittance of 5% or less in a wavelength region of 850 nm or more and less than 2,500 nm, and
   a difference of 630 nm or less between a wavelength $\lambda_{min}$ at the minimum transmittance and a wavelength $\lambda_{max}$ at a transmittance of 90% in a wavelength region of 400 nm or more and 2,500 nm or less as measured using a spectrophotometer.

2. The near-infrared transmitting black particles according to claim 1, having an average transmittance of 25% or less in a wavelength region of 400 nm or more and less than 800 nm and an average transmittance of 80% or more in a wavelength region of 850 nm or more and less than 2,500 nm as measured using a spectrophotometer.

3. The near-infrared transmitting black particles according to claim 1 or 2, comprising an organic black compound.

4. The near-infrared transmitting black particles according to claim 3, wherein the organic black compound has a structural unit derived from a compound having a hydroxy group-containing aromatic ring and a structural unit derived from a compound having an amino group-containing benzene ring.

5. The near-infrared transmitting black particles according to claim 3 or 4, wherein the organic black compound has a structural unit in which the structural unit derived from the compound having the hydroxy group-containing aromatic ring or the structural unit derived from the compound having the amino group-containing benzene ring is oxidized.

6. The near-infrared transmitting black particles according to any one of claims 3 to 5, wherein the organic black compound is oxidized with an oxidizer.

7. The near-infrared transmitting black particles according to claim 6, wherein the oxidizer contains a ketone compound.

8. The near-infrared transmitting black particles according to any one of claims 1 to 7, wherein the near-infrared transmitting black particles have a crosslinking agent or a structural unit derived from the crosslinking agent.

9. The near-infrared transmitting black particles according to any one of claims 3 to 8, wherein the organic black compound comprises an auxochrome.

10. The near-infrared transmitting black particles according to any one of claims 1 to 9, wherein the near-infrared transmitting black particles have a transmittance $T_{905}$ at a wavelength of 905 nm of 75% or more as measured using a spectrophotometer.

11. The near-infrared transmitting black particles according to any one of claims 1 to 10, wherein the near-infrared transmitting black particles have a transmittance $T_{940}$ at a wavelength of 940 nm of 75% or more as measured using a spectrophotometer.

12. The near-infrared transmitting black particles according to any one of claims 1 to 11, wherein the near-infrared transmitting black particles have a transmittance $T_{1,550}$ at a wavelength of 1,550 nm of 90% or more as measured using a spectrophotometer.

13. An ink comprising:
    the near-infrared transmitting black particles according to any one of claims 1 to 12;

a solvent; and
a binder resin.

**14.** A formed article comprising:

the near-infrared transmitting black particles according to any one of claims 1 to 12; and
a binder resin.

FIG.1

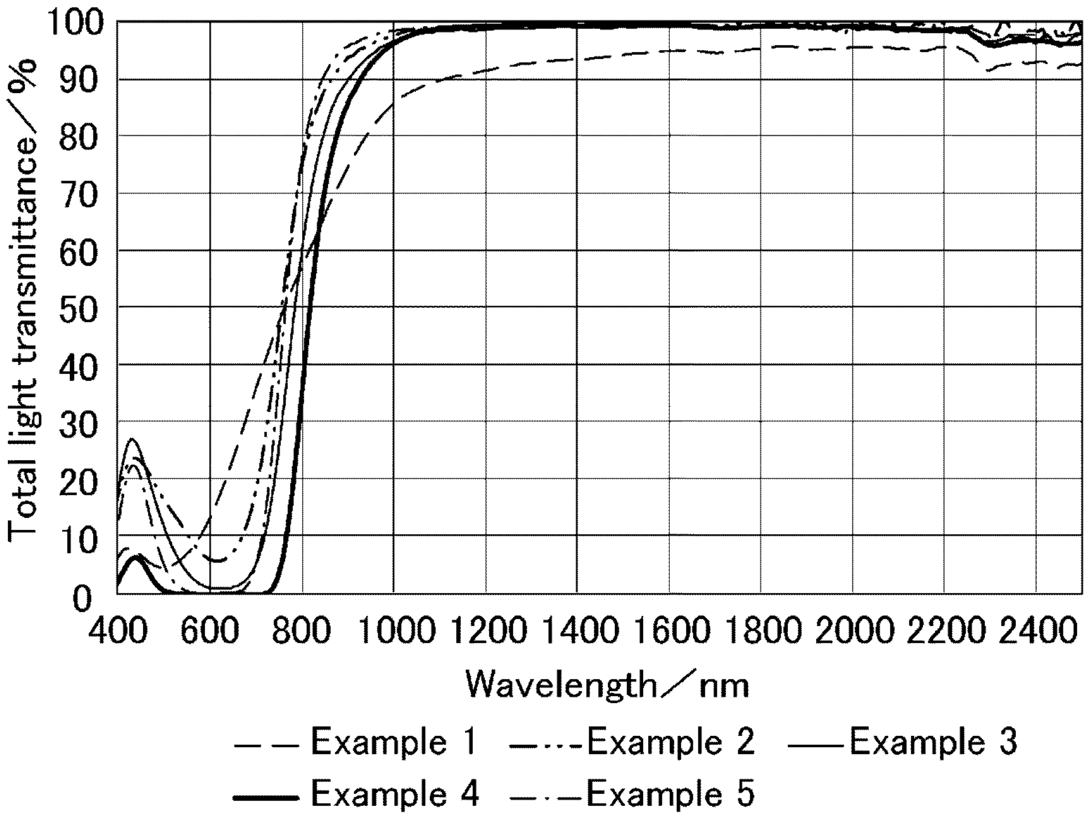
Total light transmittance／%
100
90
80
70
60
50
40
30
20
10
0
400 600 800 1000 1200 1400 1600 1800 2000 2200 2400
Wavelength／nm
Example 1
Example 2
Example 3
Example 4
Example 5

FIG.2

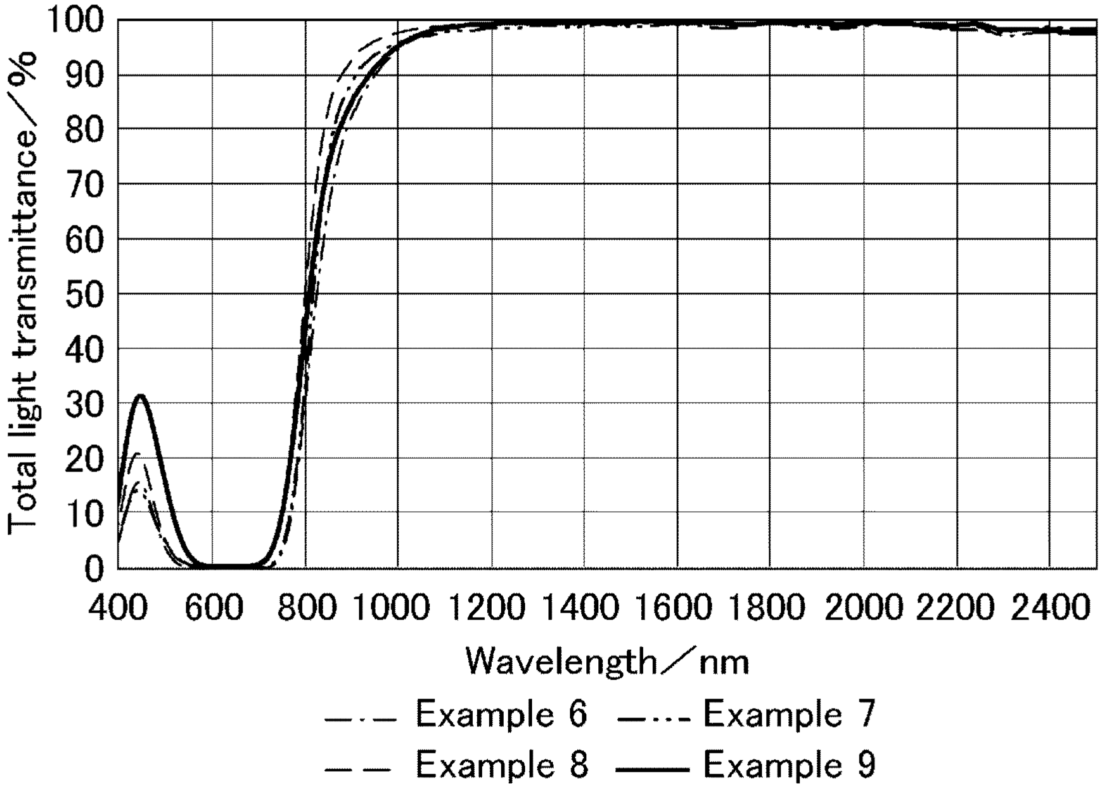
Total light transmittance／%
100
90
80
70
60
50
40
30
20
10
0
400 600 800 1000 1200 1400 1600 1800 2000 2200 2400
Wavelength／nm
Example 6
Example 7
Example 8
Example 9

FIG.3

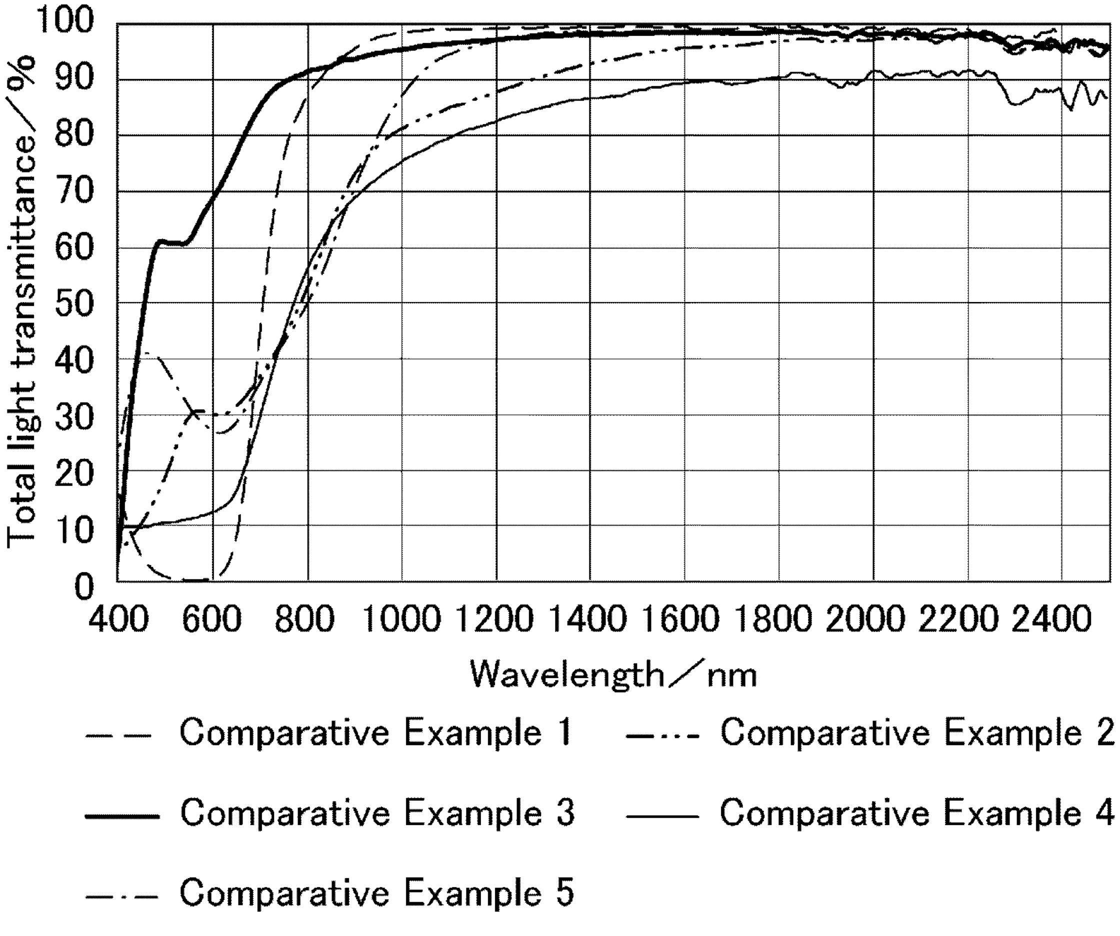
100
90
80
70
60
50
40
30
20
10
0
Total light transmittance／%
400 600 800 1000 1200 1400 1600 1800 2000 2200 2400
Wavelength／nm
Comparative Example 1
Comparative Example 2
Comparative Example 3
Comparative Example 4
Comparative Example 5

**INTERNATIONAL SEARCH REPORT**

International application No.
**PCT/JP2024/010677**

**A. CLASSIFICATION OF SUBJECT MATTER**

***C09B 59/00***(2006.01)i; ***C08L 101/00***(2006.01)i; ***C09B 67/20***(2006.01)i; ***C09D 11/037***(2014.01)i
FI: C09B59/00; C09D11/037; C08L101/00; C09B67/20 A

According to International Patent Classification (IPC) or to both national classification and IPC

**B. FIELDS SEARCHED**

Minimum documentation searched (classification system followed by classification symbols)

C09B59/00; C08L101/00; C09B67/20; C09D11/037

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2023/022199 A1 (SEKISUI CHEMICAL CO., LTD.) 23 February 2023 (2023-02-23)<br>claims 1-7, paragraphs [0018], [0023], examples | 1-4, 8-14<br>1-14 |
| Y | JP 11-236514 A (DAINICHISEIKA COLOR & CHEMICALS MFG. CO., LTD.) 31 August 1999 (1999-08-31)<br>claims 1-2, paragraphs [0006]-[0012], examples | 1-4, 9-14 |
| Y | WO 2012/169506 A1 (DAINICHISEIKA COLOR & CHEMICALS MFG. CO., LTD.) 13 December 2012 (2012-12-13)<br>claims 1-20, paragraphs [0018]-[0070], examples | 1-4, 9-14 |
| Y | WO 2012/091083 A1 (DAINICHISEIKA COLOR & CHEMICALS MFG. CO., LTD.) 05 July 2012 (2012-07-05)<br>claims 1-20, paragraphs [0018]-[0070], examples | 1-4, 9-14 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **30 April 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/010677**

**C. DOCUMENTS CONSIDERED TO BE RELEVANT**

| Category* | Citation of document, with indication, where appropriate, of the relevant passages | Relevant to claim No. |
|---|---|---|
| Y | JP 2015-110691 A (DAINICHISEIKA COLOR & CHEMICALS MFG. CO., LTD.) 18 June 2015 (2015-06-18)<br>claims 1-16, paragraphs [0022]-[0074], examples | 1-4, 9-14 |
| Y | JP 2-62539 A (AGFA GEVAERT AG) 02 March 1990 (1990-03-02)<br>page 11, examples | 5-14 |

Form PCT/ISA/210 (second sheet) (July 2022)

**INTERNATIONAL SEARCH REPORT**
**Information on patent family members**

International application No.
**PCT/JP2024/010677**

| Patent document cited in search report | Publication date (day/month/year) | Patent family member(s) | Publication date (day/month/year) |
| --- | --- | --- | --- |
| WO 2023/022199 A1 | 23 February 2023 | (Family: none) | |
| JP 11-236514 A | 31 August 1999 | (Family: none) | |
| WO 2012/169506 A1 | 13 December 2012 | CN 103597040 A | |
| | | KR 10-2014-0027429 A | |
| | | TW 201302922 A | |
| | | TW 201520275 A | |
| WO 2012/091083 A1 | 05 July 2012 | CN 103282443 A | |
| | | KR 10-2013-0108650 A | |
| | | TW 201241098 A | |
| JP 2015-110691 A | 18 June 2015 | (Family: none) | |
| JP 2-62539 A | 02 March 1990 | US 5108883 A<br>columns 29-30, examples | |
| | | EP 351588 A2 | |
| | | DE 3823020 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2010044393 A
- WO 2012026577 A
- JP 2014130173 A